(19) Europäisches Patentamt

European Patent Office

Office européen des brevets

(11) **EP 1 071 332 B1**

(12) **FASCICULE DE BREVET EUROPEEN**

(45) Date de publication et mention
de la délivrance du brevet:
**29.06.2005 Bulletin 2005/26**

(51) Int Cl.⁷: **A01N 61/00**, A01N 59/26,
A01N 57/12, A01N 43/16

(21) Numéro de dépôt: **99913385.3**

(22) Date de dépôt: **12.04.1999**

(86) Numéro de dépôt international:
**PCT/FR1999/000844**

(87) Numéro de publication internationale:
**WO 1999/053761 (28.10.1999 Gazette 1999/43)**

(54) **NOUVELLE UTILISATION DE COMPOSES ANTIFONGIQUES ET/OU ANTIBACTERIENS ET/OU ANTIVIRAUX**

NEUE VERWENDUNG VON ANTIFUNGALEN, ANTIBAKTERIELLEN UND/ODER ANTIVIRALEN ZUSAMMENSETZUNGEN

NOVEL USE OF ANTIFUNGAL AND/OR ANTIBACTERIAL AND/OR ANTIVIRAL COMPOUNDS

(84) Etats contractants désignés:
**AT BE CH DE DK ES FR GB GR IE IT LI NL PT**

(30) Priorité: **16.04.1998 FR 9805043**
**11.02.1999 FR 9901811**

(43) Date de publication de la demande:
**31.01.2001 Bulletin 2001/05**

(73) Titulaire: **Bayer CropScience S.A.**
**69009 Lyon (FR)**

(72) Inventeurs:
• **FRITIG, Bernard**
**F-67460 Sauffelwegersheim (FR)**
• **KOPP, Marguerite**
**F-67120 Wolxheim (FR)**
• **SAINDRENAN, Patrick**
**F-67000 Strasbourg (FR)**
• **LATORSE, Marie-Pascale**
**F-69210 Sourcieux les Mines (FR)**
• **LABOURDETTE, Gilbert**
**F-71600 Paray le Monial (FR)**

(56) Documents cités:
WO-A-91/06312          WO-A-97/01277
WO-A-97/14310          WO-A-98/29537
WO-A-98/46078          DD-A- 231 482
DE-A- 19 633 502       FR-A- 2 576 749
FR-A- 2 748 631        FR-A- 2 751 845
GB-A- 2 279 252

• **BIOLOGICAL ABSTRACTS, vol. 1998, Philadelphia, PA, US; abstract no. 186010, B.KAESTNER ET AL.: "Chitinase in cucumber hypocotyls is induced by geminating fungal spores and by fungal elicitors in synergism with inducers of acquired resistance" XP002089791 & PLANT JOURNAL, vol. 13, no. 4, février 1998 (1998-02), pages 447-454,**
• **DATABASE CROPU [Online] STN-International STN-accession no. 98-88654, V.A.KATZ ET AL.: "A benzothiazdiazole primes parsley cells for augmented elicitation of defense responses" XP002089793 & PLANT PHYSIOL., vol. 117, no. 4, 1998, pages 1333-1339,**
• **CHEMICAL ABSTRACTS, vol. 124, no. 21, 20 mai 1996 (1996-05-20) Columbus, Ohio, US; abstract no. 284531, T.L.GRAHAM ET AL.: "Signaling in soybean phenylpropanoid responses. Dissection of primary, secondary, and conditioning effects of light, wounding, and elicitor treatments" XP002089792 & PLANT PHYSIOL., vol. 110, no. 4, 1996, pages 1123-1133,**
• **DATABASE CABA [Online] STN-International STN-accession no. 96:17167, H.KAUSS ET AL.: "Pretreatment of parsley suspension cultures with salicylic acid enhances spontaneous and elicited production of H2O2" XP002089794 & PLANT PHYSIOLOGY, vol. 108, no. 3, 1995, pages 1171-1178,**

- DATABASE CABA [Online] STN-International STN-accession no. 95:27890, H.KAUSS ET AL.: "Pretreatment of parsley (Petroselinum crispum L.) suspension cultures with methyl jasmonate enhances elicitation of activated oxygen species" XP002089795 & PLANT PHYSIOLOGY, vol. 105, no. 1, 1994, pages 89-94,
- DATABASE CABA [Online] STN-International STN-accession no. 95:1588, H.KAUSS ET AL.: "Methyl jasmonate conditions parsley suspension cells for increased elicitation of phenylpropanoid defense responses" XP002089796 & BIOCHEMICAL AND BIOPHYSICAL RESEARCH COMMUNICATIONS, vol. 189, no. 1, 1992, pages 304-308,
- PATENT ABSTRACTS OF JAPAN vol. 97, no. 10, 31 octobre 1997 (1997-10-31) & JP 09 143013 A (YAIZU SUISAN), 3 juin 1997 (1997-06-03)
- DATABASE CROPU [Online] STN-International STN-accession no. 98-90419, J.M.JOUBERT ET AL.: "A beta 1-3 glucan specific to a marine alga, stimulates plant defence reactions and induces a broad range resistance against pathogens" XP002108577 & PROC.BR.CROP.PROT.CONF.PESTS DIS., vol. 2, 1998, pages 441-448,
- PATENT ABSTRACTS OF JAPAN vol. 95, no. 5, 30 juin 1995 (1995-06-30) & JP 07 048214 A (MITSUI ENG & SHIPBUILD), 21 février 1995 (1995-02-21)
- DATABASE CROPU [Online] STN-International STN-accession no. 94-80365, C.M.STEVENI ET AL.: "Some Properties of a Seaweed Extract Based on Ascophyllum nodosum when Sprayed, In Conjunction with an Adjuvant or Fungicide, on to a Barley Crop Infected with Erysiphe graminis (Cereal Mildew)" XP002108607 & J.SCI.FOOD AGRIC., vol. 63, no. 1, 1993, page 128

**Description**

La présente invention concerne l'utilisation nouvelle d'un ou plusieurs composés antifongiques et/ou antibactériens et/ou antiviraux comme amplificateur (potentialisateur) des réponses physiologiques des plantes, par exemple des réponses de défenses des plantes aux agents pathogènes. Les mécanismes de défense naturelle induite chez les plantes, dont le modèle type est la réaction d'hypersensibilité (HR), sont constitués d'une cascade complexe d'événements impliquant la perception par la plante du microbe ou d'un composé microbien ("éliciteur"), la mort des cellules atteintes et la production de signaux et messagers chimiques divers. Ces signaux et messagers chimiques vont induire des changements métaboliques associés à la défense active : activation de la phénylalanine ammoniac-lyase (PAL), enzyme clé de la voie des phénylpropanoïdes conduisant à la biosynthèse de composés aromatiques à activité antibiotiques (phytoalexines), des molécules de signalisation comme l'acide salicylique (AS) ou encore des molécules structurales (lignine); activation de la voie octadécanoïque et en particulier de la lipoxygénage (LOX) capable de générer des hydroperoxydes et des radicaux libres impliqués dans la mort cellulaire, ou des molécules de signalisation comme l'acide jasmonique.

Par effet de potentialisation, on entend une activité de sensibilisation de la plante ou de cellules à répondre de manière fortement amplifiée à une sollicitation ultérieure, par exemple un traitement par un éliciteur. Un potentialisateur sera donc un composé (une molécule) et/ou un mélange de composé qui sensibilise la plante à répondre de manière amplifiée lors de l'application d'une (ou plusieurs) autre molécule élicitrice. Il a été trouvé que ce potentialisateur peut lui même être doué de propriétés élicitrices.

Il est divulgué dans un article de *Biological Abstracts, vol. 1998, Philadelphia, PA, US; abtract n° 186010. B. Kaestner et al*. une application simultanée de certains éliciteurs avec un "inducteur de résistance" tel que l'acide isonicotinique, l'acide salicylique, ou un composé benzothiadiazole (BTH). Cette article mentionne qu'une telle application permet la production de chitinase par le concombre, c'est-à-dire une réaction de défense de la plante. Ce document mentionne également l'effet potentialisateur de l'acide isonicotinique sur la réponse physiologique du plant de concombre. Néanmoins, ce document demeure silencieux quant à l'effet potentialisateur d'autres composés que l'acide isonicotinique.

Il a maintenant été trouvé que l'emploi de certains composés antifongiques et/ou antibactériens et/ou antiviraux B permet d'amplifier les réponses obtenues par le seul emploi d'éliciteurs A.

La présente invention a donc pour objet l'utilisation d'un ou plusieurs dérivé antifongique et/ou antibactérien et/ou antiviral B choisi dans la liste comprenant l'acide phosphoreux ou ses dérivés et ses sels alcalins ou alcalino-terreux, l'acibenzolar-S-methyl, le chitosan, l'acide aminobutyrique, comme amplificateur (potentialisateur) des réponses physiologiques des plantes obtenues après application d'un ou plusieurs éliciteur A ; celui-ci ne pouvant être simultanément utilisé comme potentialisateur.

Dans le cadre de la présente invention, l'acide isonicotinique pourra également être appelé INA et l'acide aminobutyrique pourra également être appelé BABA.

L'acibenzolar-S-methyl est également connu sous le nom de Bion™ ou BTH ou CGA 245704.

Le chitosan est également connu sous le nom d'Elexa™.

Le composé potentialisateur B est choisi dans la liste comprenant l'acide phosphoreux ou ses dérivés et ses sels alcalins ou alcalino-terreux, l'acibenzolar-S-methyl, le chitosan, l'acide aminobutyrique.

La présente invention concerne particulièrement l'utilisation nouvelle de l'acide phosphoreux et/ou de l'un de ses dérivés comme amplificateur (potentialisateur) des réponses de défenses des plantes.

De manière préférée, les dérivés de l'acide phosphoreux sont des phosphites métalliques qui sont préférentiellement choisis comme étant le fosetyl-Al ou le fosetyl-Na.

Le composé éliciteur A est préférentiellement choisi dans la liste de composés comprenant des protéines, des oligosaccharides (comme par exemple le tréhalose), des polysaccharides (comme par exemple le chitosan), des lipides, des glycolipides, des glycoprotéines, des peptides, des extraits de parois issus de matériel végétal et/ou de champignons, des champignons, l'acibenzolar-S-methyl ou l'un de ses analogues, des extraits de levure, de l'acide salicylique et/ou l'un ou plusieurs de ses esters, un ou plusieurs extraits d'algues.

De préférence, le composé A éliciteur est un (ou plusieurs) extrait d'algues (hydrolysats), comme par exemple les oligopectines décrites dans le document WO98/47375, incorporé ici par référence.

Encore plus avantageusement, la liste, non exhaustive, des algues pouvant être utilisées dans le cadre de la présente invention sont des algues éventuellement proposées par la société Agrocean, telles que par exemple Agrimer 540, CAL, Agrotonic, Laminaria sp. (*Laminaria digitalis, Laminaria saccharina, Laminaria hyperborea*), Ascophyllum sp. (*Ascophyllum nodosum*), Himanthalla sp. (*Himanthalla elongata*), Undaria sp. (*Undaria pinnatifida*), Fucus sp. *(Fucus vesiculum*), Ulva sp., Chondrus sp., Enteromorphe sp.

La présente invention concerne en particulier l'effet potentialisateur de l'acide phosphoreux ($H_3PO_3$) et du fosetyl-Na, mais aussi du Bion™, sur les réponses de défense du tabac (induction des activités PAL, LOX, production d'AS) après application d'éliciteurs de natures diverses tels i) des oligosaccharides de types β-glucane isolés de parois de *Phytophthora megasperma* (Pmg), ii) des oligomères de pectine, iii) la β-mégaspermine, protéine sécrétée par *P. megasperma* H20.

La présente invention concerne en particulier l'effet potentialisateur de l'acide phosphoreux ($H_3PO_3$) et du fosetyl-Al, mais aussi de l'Elexa™, sur les réponses obtenues, dans le cadre des essais biologiques, par l'application d'éliciteurs de nature diverse (extrait d'algues, Elexa™, Bion™, acide salicylique et/ou ester, extrait de levure, tréhalose, spores tuées ou non d'un champignon non hôte (spores d'oïdium de l'orge)).

Il est bien entendu, et également inclus dans le cadre de la présente invention, que l'utilisation décrite ci-dessus peut être éventuellement complétée par un traitement fongicide classique à l'aide d'un fongicide connu, ce traitement pouvant avoir lieu simultanément ou séparément des applications de A et/ou B. fosetylfosetylfosetyl-

L'invention a pour autre objet un procédé de lutte à titre préventif contre les champignons phytopathogènes des cultures et/ou bactéries et/ou virus

caractérisé en ce que l'on applique sur les parties aériennes des végétaux une quantité efficace et non phytotoxique d'une combinaison d'un ou plusieurs composé A et d'au moins un composé B, par exemple dans une composition antifongique et/ou antibactérienne et/ou antivirale selon l'invention. Le procédé global peut en outre éventuellement prévoir un traitement supplémentaire à l'aide d'un fongicide connu, ce fongicide étant appliqué simultanément ou séparément des composés A et/ou B.

Les champignons phytopathogènes des cultures qui peuvent être combattus par ce procédé sont notamment ceux :

- du groupe des oomycètes :

  - du genre *Phytophthora* tel que *Phytophthora phaseoli, Phytophthora citrophthora, Phytophthora capsici, Phytophthora cactorum, Phytophthora palmivora, Phytophthora cinnamoni, Phytophthora megasperma, Phytophthora parasitica, Phytophthora fragariae, Phytophthora cryptogea, Phytophthora porri, Phytophthora nicotianae, Phytophthora infestans* (mildiou des solanées, notamment de la pomme de terre ou de la tomate);
  - de la famille des Péronosporacées, notamment *Plasmopara viticola* (mildiou de la vigne), *Plasmopara halstedei* (mildiou du tournesol), *Pseudoperonospora sp* (notamment mildiou des cucurbitacees (*Pseudoperonospora cubensis*) et du houblon (*Pseudoperonospora humuli*)), *Bremia lactucae* (mildiou de la laitue), *Peronospora tabacinae* (mildiou du tabac), *Peronospora destructor* (mildiou de l'oignon), *Peronospora parasitica* (mildiou du chou), *Peronospora farinosa* (mildiou des endives et mildiou de la betterave).

- du groupe des adélomycètes (ascomycètes):

  - du genre *Alternaria*, par exemple *Alternaria solani* (alternariose des solanées, et notamment de la tomate et des pommes de terre),
  - du genre *Guignardia,* notamment *Guignardia bidwellii* (black rot de la vigne),
  - du genre *Venturia*, par exemple *Venturia inaequalis, Venturia pirina* (tavelures du pommier ou du poirier),
  - du genre *Oïdium*, par exemple oïdium de la vigne (*Uncinula necator*) ; oïdium des cultures légumières, par exemple *Erysiphe polygoni* (oïdium des crucifères) ; *Leveillula taurica, Erysiphe cichoracearum, Sphaerotheca fuligena* (oïdium des cucurbitacées, des composées, de la tomate) ; *Erysiphe communis* (oïdium de la betterave et du *chou*) *; Erysiphe pisi* (oïdium du pois, de la *luzerne*) *; Erysiphe polyphaga* (oïdium du haricot et du concombre) ; *Erysiphe umbelliferarum* (oïdium des ombellifères, notamment de la carotte) ; *Sphaerotheca humuli* (oïdium du houblon) ; oïdiums du blé et de l'orge (*Erysiphe graminis forma specie tritici* et *Erysiphe graminis forma specie hordei*),
  - du genre *Taphrina,* par exemple *Taphrina deformans* (cloque du pêcher),
  - du genre *Septoria,* par exemple *Septoria nodorum* ou *Septoria tritici* (septoriose des céréales),
  - du genre *Sclerotinia,* par exemple *Sclerotinia sclerotirium,*
  - du genre *Pseudocercosporella*, par exemple *P. herpotrichoides* (piétin verse des céréales),
  - du genre *Botrytis cinerea* (vigne, culture légumières et maraîchères, pois,.....),
  - du genre *Phomopsis viticola* (excoriose de la vigne),
  - du groupe des Basidiomycètes :

    - du genre *Puccinia,* par exemple *Puccinia recondita* ou *striiformis* (rouilles du blé), *Puccinia triticina, Puccinia hordei,*
    - de la famille *Rhizoctonia* spp, par exemple *Rhizoctonia solani.*

Les maladies d'origine bactérienne et virale qui peuvent être combattues par ce procédé sont notamment :

- le feu bactérien, *Erwinia amylovora* ;
- la tache bactérienne des arbres fruitiers à noyau, *Xanthomonas campestris* ;
- la bactériose du poirier, *Pseudomonas syringae* ;
- la bactériose du riz et des céréales ;
- les virus présents sur le riz, les cultures légumières et céréalières.

Les cultures envisagées dans le cadre de la présente invention sont de préférence les cultures céréalières (blé, orge, maïs, riz) et légumières (haricot, oignon, cucurbitacées, chou, pomme de terre, tomate, poivron, épinard, pois, laitue, céleri, endives), les cultures fruitières (fraisiers, framboisiers), les cultures arboricoles (pommiers, poiriers, cerisiers, ginseng, citronniers, cocotiers, pécaniers, cacaoyers, noyers, hévéas, oliviers, peupliers, bananiers), la vigne, le tournesol, la betterave, le tabac et les cultures ornementales.

Un classement fait non plus par champignons ou bactéries visés mais par cultures cibles peut être illustré comme ci-dessous :

- la vigne: oïdium (*Uncinula necator*), mildiou (*Plasmopara viticola*), pourriture (*Botrytis cinerea*), excoriose (*Phomopsis viticola*) et black-rot (*Guignardia bidwellii*),
- les solanées: mildiou (*Phytophthora infestans*), alternariose (*Alternaria solani*) et pourriture (*Botrytis cinerea*),
- les cultures légumières: mildious (*Peronospora* sp., *Bremia lactucae, Pseudoperonospora* sp), alternariose (*Alternaria* sp.), sclérotiniose (*Sclerotinia* sp.), pourriture (*Botrytis cinerea*), pourriture du pied ou des racines (*Rhizoctonia* spp.), oïdium (*Erysiphe* sp.; *Sphaerotheca fuliginea*),
- l'arboriculture: tavelure (*Venturia inaequalis, V. pirina*), maladies bactériennes (*erwinia amylovora, xanthomonas campestris, pseudomonas syringae*), oïdium (*Podosphaera leucotricha*) et moniliose (*Monilia fructigena*),
- les agrumes: tavelure (*Elsinoe fawcetti*), mélanose (*Phomopsis citri*) et maladies à *Phytophthora* sp.,
- le blé, en ce qui concerne la lutte contre les maladies suivantes des semences : les fusarioses (*Microdochium nivale* et *Fusarium roseum*), les caries (*Tilletia caries, Tilletia controversa* ou *Tilletia indica*), la septoriose (*Septoria nodorum*),
- le blé, en ce qui concerne la lutte contre les maladies suivantes des parties aériennes de la plante : le piétin-verse (*Pseudocercosporella herpotrichoïdes*), le piétin-échaudage (*Gaeumannomyces graminis*), la fusariose du pied (*F. culmorum, F. graminearum*), le rhizoctone (*Rhizoctonia cerealis*), l'oïdium (*Erysiphe graminis forma specie tritici*), les rouilles (*Puccinia striiformis* et *Puccinia recondita*) et les septorioses (*Septoria tritici* et *Septoria nodorum*),
- le blé et l'orge, en ce qui concerne la lutte contre les maladies bactériennes et virales, par exemple la jaunisse nanisante de l'orge,
- l'orge, en ce qui concerne la lutte contre les maladies suivantes des semences : les helminthosporioses (*Pyrenophora graminea, Bipolaris, Pyrenophora teres* et *Cochliobolus sativus*), le charbon nu (*Ustilago nuda*) et les fusarioses (*Microdochium nivale* et *Fusarium roseum*),
- l'orge, en ce qui concerne la lutte contre les maladies suivantes des parties aériennes de la plante : le piétin-verse (*Pseudocercosporella herpotrichoïdes*), les helminthosporioses (*Pyrenophora teres* et *Cochliobolus sativus*), l'oïdium (*Erysiphe graminis forma specie hordei*), la rouille naine (*Puccinia hordei*) et la rhynchosporiose (*Rhynchosporium secalis*) ;
- la pomme de terre, en ce qui concerne la lutte contre les maladies du tubercule (notamment *Helminthosporium solani, Phoma tuberosa, Rhizoctonia solani, Fusarium solani*) et certaines viroses (virus Y);
- le coton, en ce qui concerne la lutte contre les maladies suivantes des jeunes plantes issues des semences :les fontes de semis et les nécroses du collet (*Rhizoctonia solani, Fusarium oxysporum*), la pourriture noire des racines (*Thielaviopsis basicola*),
- le pois, en ce qui concerne la lutte contre les maladies suivantes des semences : l'anthracnose (*Ascochyta pisi, Mycosphaerella pinodes*), la fusariose (*Fusarium oxysporum*), la pourriture grise (*Botrytis cinerea*), la rouille (*Uromyces pisi*),
- le colza, en ce qui concerne la lutte contre les maladies suivantes des semences : *Phoma lingam* et *Alternaria brassicae*, la pourriture (*Botrytis cinerea*), et sclérotiniose (*Sclerotinia sclerotirium*),
- le maïs, en ce qui concerne la lutte contre les maladies des semences (*Rhizopus* sp., *Penicillium* sp., *Trichoderma* sp., *Aspergillus* sp. *et Gibberella fujikuroi*), les helminthosporioses (*Bipolaris*), la fusariose (*Fusarium oxysporum*),
- le riz: pourriture du pied ou des racines (*Rhizoctonia* spp.),
- le lin, en ce qui concerne la lutte contre la maladie des semences (*Alternaria linicola*),
- la banane: cercosporiose (*Mycosphaerella figiensis*),
- le gazon: rouille, oïdium, helminthosporiose, maladies telluriques (*Microdochium nivale, Pythium* sp., *Rhizoctonia solani, Sclerotinia homeocarpa*...),
- les arbres forestiers, en ce qui concerne la lutte contre les fontes de semis (*Fusarium oxysporum, Rhizoctonia*

*solani*).

Les exemples suivants sont donnés à titre purement illustratif de l'invention, qu'ils ne limitent en aucune façon.

Des expérimentations ont été entreprises sur les effets physiologiques induits dans les réponses de défenses dans les cultures cellulaires de tabac par mesure de la production d'enzymes comme la PAL et la LOX et d'acide salicylique et sur les effets de protection antifongique dans le cas des couples oïdium du blé et mildiou de la vigne.

Le fosetyl-Al et l'acide phosphoreux ont été prioritairement choisis comme potentialisateurs dans l'expérimentation biologique mais pour des raisons de toxicité du fosetyl-Al sur culture cellulaire de tabac nous lui avons substitué le fosetyl-de sodium dans les tests cellulaires.

L'utilisation de système modèle simplifié telless les cultures cellulaires traitées par des éliciteurs de natures variées permet de mimer parfaitement la HR tout en se débarrassant de la composante spatiale inhérente à la plante entière, et d'avoir accès aux événements précoces de signalisation intracellulaire. Nous abordons dans cette invention la problématique de la potentialisation des réponses de défense par des substances chimiques.

Les éliciteurs A ont été choisis appartenant à différentes catégories protéiques et saccharidiques mais ne sont pas les mêmes pour les tests cellulaires et biologiques sur plantes.

L'acibenzolar-S-methyl est le produit de référence éliciteur choisi et la raison pour laquelle le couple oidium/blé a été retenu dans les manipulations biologiques préliminaires réalisées.

Afin de décortiquer les phénomènes induits par l'application du potentialisateur B d'une part et de l'éliciteur A d'autre part, l'ensemble des essais préliminaires concernent des traitements séquentiels (séparés dans le temps) entre potentialisateur et éliciteurs. Cela n'exclut pas que les deux types de produits soient mis en mélanges ou que ceux-ci soient utilisés simultanément (bien que non en mélanges).

Les différents éliciteurs (fragments pariétaux de *Phytophthora megasperma* H20, oligomères de pectine, une élicitine produite par *P. megasperma,* la β-mégaspermine) sont préparés dans l'eau. Le pH des solutions est ajusté si nécessaire autour de 5,5.

L'acide phosphoreux, le fosetyl-Na, le fosetyl-Al, l'ester d'acide salicylique et le chitosan sont préparés dans l'eau. L'acibenzolar-S-methyl est préparé dans le DMSO pour les tests sur cellules de tabac et est utilisé sous la forme commerciale Bion™ pour les tests sur plantes.

Exemple 1 : **Effets physiologiques.**

1) Le choix des marqueurs biochimiques sur cellules de tabac.

- ◆ mesure de l'activité PAL (phénylalanine ammoniac-lyase) : enzyme clé de la voie des phényl propanoides et plus particulièrement de la lignification impliquée dans les réactions de défense des plantes (chez les monocotylédones tout particulièrement).
- ◆ mesure de l'acide salicylique : molécule de signalisation.
- ◆ mesure de l'activité LOX (lipoxygénase) enzyme clé de la synthèse de l'acide jasmonique, autre molécule de signalisation.

2) Matériel Végétal.

Les suspensions cellulaires utilisées sont des suspensions de *Nicotiana tabacum* BY (Brigth Yellow) provenant de Washington State University (Pullman, USA). Elles sont cultivées à l'obscurité, 24°C sous agitation (120 rpm) et repiquées tous les 7 jours par transfert de 10 ml de culture dans 70 ml de milieu frais.
La composition du milieu de culture est donnée pour 1 litre:

- - Murashige et Skoog salts (Duchefa) 4,3g
- - sucrose 30g
- - Bl(thiamine) 1mg
- - inositol 100mg
- - $KH_2PO_4$ 1,47 mM

Le pH est ajusté à 5,8.

Les cellules sont prétraitées 5 jours après repiquage (fin de la phase exponentielle de croissance) et élicitées au 6ème jour. Deux heures avant prétraitement, 10 ml de cellules sont transférés dans des erlenmeyers de 25ml. Pour les analyses des activités phénylalanine ammoniac-lyase (PAL), lipoxygénase (LOX) et la détermination de l'acide salicylique (SA), les cellules sont récoltées au temps voulu par filtration sur papier Wathman 3M, congelées dans l'azote liquide et conservées à -80°C jusqu'à l'analyse.

3) Activité Phénylalanine ammoniac-lyase (PAL).

Les cellules (0,5g) sont broyées dans du tampon borate 0,1M pH 8,8 en présence de charbon actif et de quartz. Le rapport de broyage est de 1/5 (p/v). Après centrifugation, 100µl d'extrait cellulaire sont mis à incuber 1h à 37°C en présence de 200µl de tampon borate 0,1M pH 8,8 et de 100 µl d'un mélange tampon borate 0,1M pH 8,8, L-phénylalanine 300µM (mélange marquée et froide), la solution finale présente une activité spécifique de 810.000cpm/ml.

La réaction est arrêtée par l'ajout de quelques gouttes de H2SO4 9N. On rajoute 2ml d'H20. Les produits de la réaction sont extraits en ajoutant 2ml d'un mélange éther/cyclohexane (1/1, v/v). La phénylalanine n'étant pas soluble dans ce mélange, le comptage de la réaction est fait sur 1ml en présence de liquide de scintillation 'multi-purpose'.

4) Activité Lipoxygènase (LOX).

Les cellules (250mg) sont broyées dans 0,5 ml de tampon d'extraction en présence de quartz.
Tp d'extraction :

- Tp tris 0,1M Ph 6,8
- PVP 1% p/v
- $Na_2S_2O_5$ 0,04%
- PMSF 0,5mM
- EDTA 3mM
- Triton 0,1% v/v

Le broyât est centrifugé 15min à 4°C à 13000 rpm. 2,87ml de tampon Tris 0,1M pH 6,8 puis 30µl d'acide linolénique 10mM sont ajoutés à l'extrait cellulaire. Après agitation, on suit l'évolution de la DO à 234 nm.

5) Extraction et dosage de l'acide salicylique (AS).

Les échantillons (0,5 g) de cellules ou de feuilles de tabac sont broyés dans de l'azote liquide, puis le broyage est poursuivi en présence 0,8 ml de méthanol 90%. Une quantité connue d'AS marqué au $^{14}$C (1 nCi, 54 mCi/mole, Sigma) est alors ajoutée afin d'estimer le rendement de récupération de l'AS endogène. La quantité d'AS marqué ajoutée est inférieure au seuil de détection de l'analyse. Les extraits méthanoliques sont agités vigoureusement et centrifugés pendant 20 min à 13000 rpm. Le surnageant est récupéré et le culot est soumis à une seconde extraction par du méthanol 100%. Après centrifugation, les deux surnageants sont rassemblés. Les échantillons sont ensuite évaporés à sec au concentrateur sous vide. Les extraits secs sont repris dans 0,5 ml d'eau à 80°C.
Les échantillons sont amenés à pH 2 par l'ajout d'HCl 2 M, puis chauffés à 80°C pendant une heure. Par la suite, les échantillons sont soumis à deux extractions successives par 2 volumes d'éther. Après extraction, les phases éthérées sont rassemblées et l'éther est évaporé sous un flux d'azote. Les résidus secs sont dissous dans environ 150 µl de tampon de charge (acétate de sodium 20 mM pH 5 ; acétonitrile, dans les proportions 9 : 1 (v/v)). 20 ml auxquels sont ajoutés 3 ml de liquide de scintillation (Ready Gel, Beckmann) sont prélevés pour le comptage de la radioactivité résiduelle qui permet le calcul du rendement de récupération de l'AS. Les teneurs en AS total déterminées correspondent à la somme des teneurs en AS sous forme libre et des teneurs en AS sous forme conjuguée, l'AS étant relargué au cours de l'hydrolyse.

*Analyse quantitative par CLHP*

50 µl des échantillons repris dans le tampon de charge sont injectés sur une colonne C18 phase inverse (Nova pak waters, 3,9x150 mm) équilibrée dans le mélange tampon acétate de Na (20 mM, pH 5) 97% / acétonitrile 3% sous un débit de 1ml/min. L'élution est programmée sur un système CLHP Waters dans un système isocratique pendant 10 min. La proportion d'acétonitrile augmente ensuite jusqu'à 80% durant 2 min, cette proportion est maintenue pendant 10 min, ce qui permet le lavage de la colonne qui est ensuite rééquilibrée dans le mélange de départ durant 5 minutes, avant une nouvelle injection. L'AS est quantifié par fluorimétrie (λ excitation=315 nm; λ émission=405 nm). Le pic correspondant à cette molécule est identifié par comparaison du temps de rétention avec celui de l'AS de référence (50 ng). Les quantités d'AS injectées sont calculées grâce à la comparaison de l'aire des pics correspondant à l'AS avec celle de la molécule standard injectée. Les teneurs en AS dans les échantillons sont ensuite calculées en tenant compte du rendement de récupération.

6) Cinétique de traitement.

Dans tous les cas, le prétraitement avec le potentialisateur est réalisé 18 heures avant le traitement éliciteur. Les prélèvements pour analyse des effets physiologiques ont lieu 4 heures, 12 heures ou 24 heures après élicitation . Les témoins correspondant à une potentialisation seule ou une élicitation seule sont systématiquement présents pour chaque prélèvement.

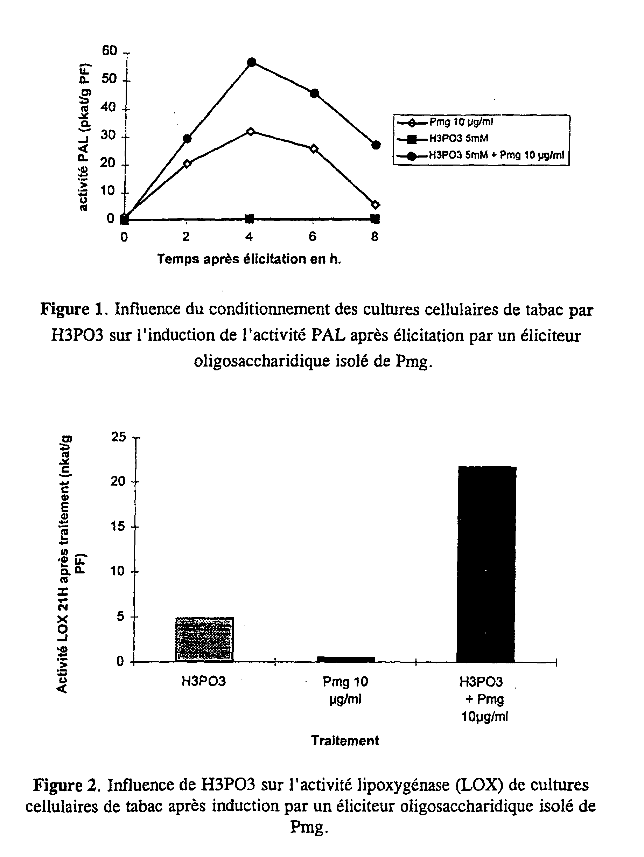

Résultats : on se reportera aux figures 1 à 9 en fin de descriptions, figures pour lesquelles les commentaires suivants sont donnés :

**Figure 1.** Influence du conditionnement des cultures cellulaires de tabac par $H_3PO_3$ sur l'induction de l'activité PAL après élicitation par un éliciteur oligosaccharidique isolé de Pmg.

Les cultures cellulaires ont été conditionnées (prétraitement) par 5mM de $H_3PO_3$ pendant 18h et induites par 10μg/ml d'éliciteur oligosaccharidique de type β-glucane. L'élicitation entraîne par elle-même une augmentation transitoire de l'activité PAL qui retourne à son niveau initial 8h après l'application de l'éliciteur. Un prétraitement des cellules par $H_3PO_3$ (5mM) amplifie nettement la réponse à l'éliciteur (élicitabilité) et augmente la durabilité du phénomène.

**Figure 2.** Influence de $H_3PO_3$ sur l'activité lipoxygénase (LOX) de cultures cellulaires de tabac après induction par un éliciteur oligosaccharidique isolé de Pmg.

L'activité LOX a été mesurée 21 h après l'élicitation par 1 0μg/ml d'éliciteur oligosaccharidique de type β-glucane. L'effet du prétraitement des cellules par $H_3PO_3$, sur l'élicitabilité cellulaire est important puisqu'il permet d'induire une activité LOX environ 4 fois supérieure au témoin correspondant. Un léger effet inducteur de l'activité LOX est observable 39h (18h de prétraitement+21h) après l'application de $H_3PO_3$ seul.

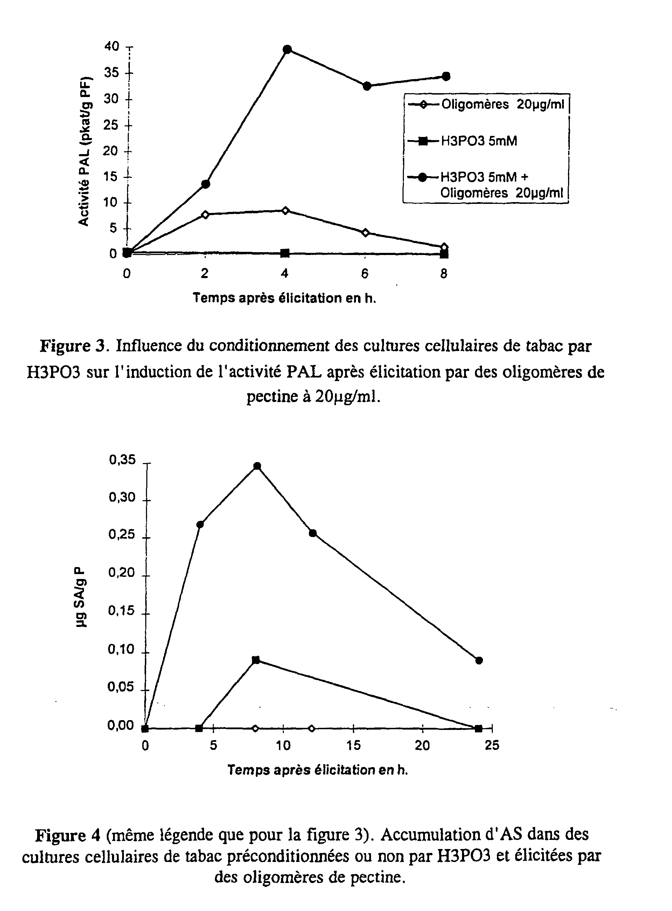

**Figure 3.** Influence du conditionnement des cultures cellulaires de tabac par $H_3PO_3$ sur l'induction de l'activité PAL après élicitation par des oligomères de pectine.

Les cultures cellulaires ont été conditionnées par 5mM de $H_3PO_3$ pendant 18h et élicitées par 20 μg/ml d'oligomères de pectine. Le traitement des cellules par l'éliciteur entraîne une augmentation transitoire de l'activité PAL qui retourne à son niveau initial 8h après élicitation. Le conditionnement des cellules par $H_3PO_3$ provoque après élicitation une forte stimulation de l'activité PAL qui se maintient à un niveau élevé pendant toute la durée de l'expérimentation. Aucun effet significatif d'induction de l'activié PAL n'est détectable après l'application de $H_3PO_3$ seul.

**Figure 4.** Accumulation d'AS dans des cultures cellulaires de tabac préconditionnées ou non par $H_3PO_3$ et élicitées par des oligomères de pectine.

L'AS s'accumule très transitoirement et faiblement en réponse à l'élicitation par 20 μg/ml d'oligomères de pectine. Le conditionnement des cellules par $H_3PO_3$, 18h avant l'élicitation, entraîne une importante augmentation du taux de synthèse d'AS par rapport aux cellules non conditionnées.

**Figure 5.** Influence du conditionnement des cultures cellulaires de tabac par $H_3PO_3$ et le fosetyl-Na sur l'induction de l'activité PAL après élicitation par des oligomères de pectine.

Les cultures cellulaires ont été conditionnées par 5mM de $H_3PO_3$ ou de fosetyl-Na pendant 18h et élicitées par 20 μg/ml d'oligomères de pectine. Le traitement des cellules par l'éliciteur entraîne une augmentation transitoire de l'activité PAL qui retourne à son niveau initial 11h après élicitation. Le conditionnement des cellules par $H_3PO_3$ provoque après élicitation une stimulation de l'activité PAL supérieure à celle observée dans les cellules non-conditionnées. Le fosetyl-Na maintient l'activité PAL à un niveau élevé 11h après l'élicitation (effet de durabilité). Aucun effet significatif d'induction de l'activité PAL n'est détectable après l'application de fosetyl-Na seul.

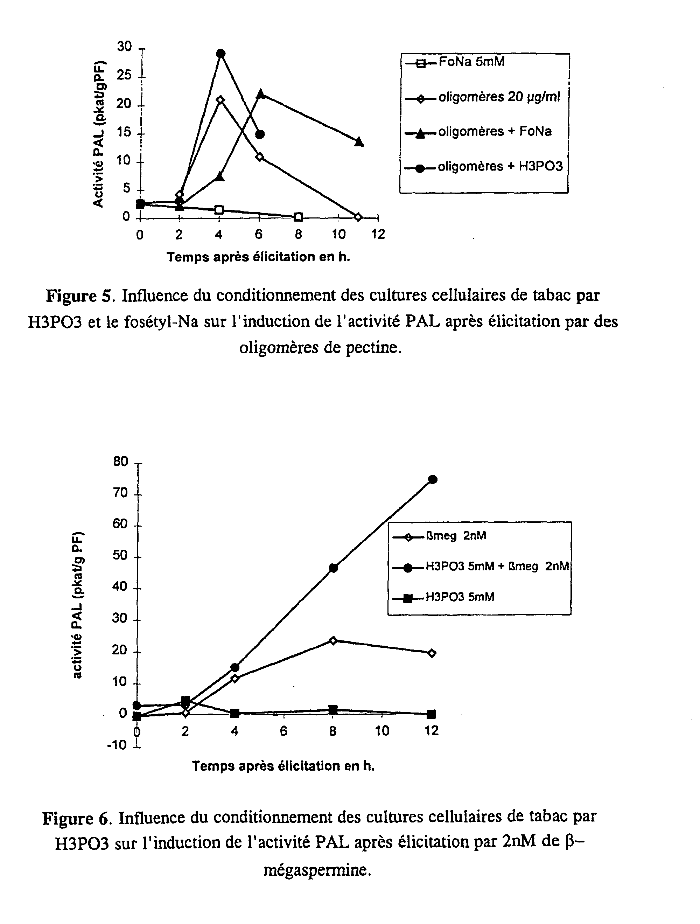

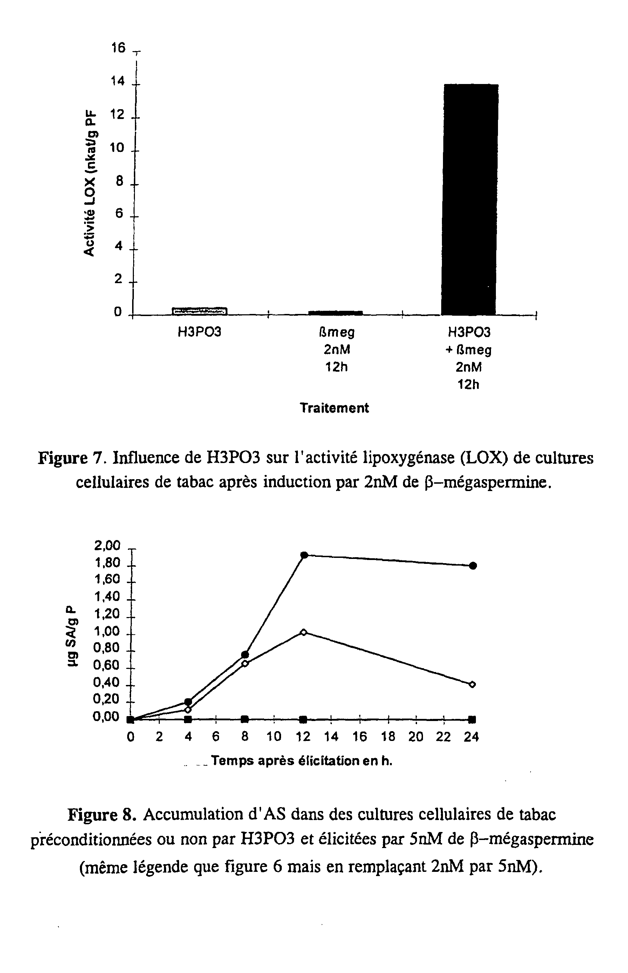

**Figure 6.** Influence du conditionnement des cultures cellulaires de tabac par $H_3PO_3$ sur l'induction de l'activité PAL après élicitation par 2nM de β-mégaspermine.

Les cultures cellulaires ont été conditionnées par 5mM de $H_3PO_3$ pendant 18h et élicitées par 2nM de β-mégaspermine. L'application de l'éliciteur seul, entraîne une augmentation de l'activité PAL qui se stabilise 8h après l'élicitation. L'activité PAL des cellules prétraitées par $H_3PO_3$ augmente linéairement après élicitation pour atteindre 4 fois le niveau des cellules non-conditionnées.

**Figure 7.** Influence de $H_3PO_3$ sur l'activité lipoxygénase (LOX) de cultures cellulaires de tabac après induction par 2nM de β-mégaspermine.

L'activité LOX a été mesurée 12h après l'élicitation par 2nM de β-mégaspermine. L'effet du prétraitement des cellules (18h) par $H_3PO_3$, sur l'élicitabilité cellulaire est très important puisqu'il permet d'induire une activité LOX environ 28 fois supérieure au témoin correspondant. Aucun effet inducteur de l'activité LOX n'est observable 30h (18h de prétraitement+12h) après l'application de $H_3PO_3$ seul.

**Figure 8.** Accumulation d'AS dans des cultures cellulaires de tabac préconditionnées ou non par $H_3PO_3$ et élicitées par 5nM de β-mégaspermine.

L'AS s'accumule transitoirement en réponse à l'élicitation par 5nM de β-mégaspermine. Le conditionnement des cellules par $H_3PO_3$, 18h avant l'élicitation, entraîne une importante augmentation du taux de synthèse d'AS par rapport aux cellules non conditionnées et une persistance de l'effet.

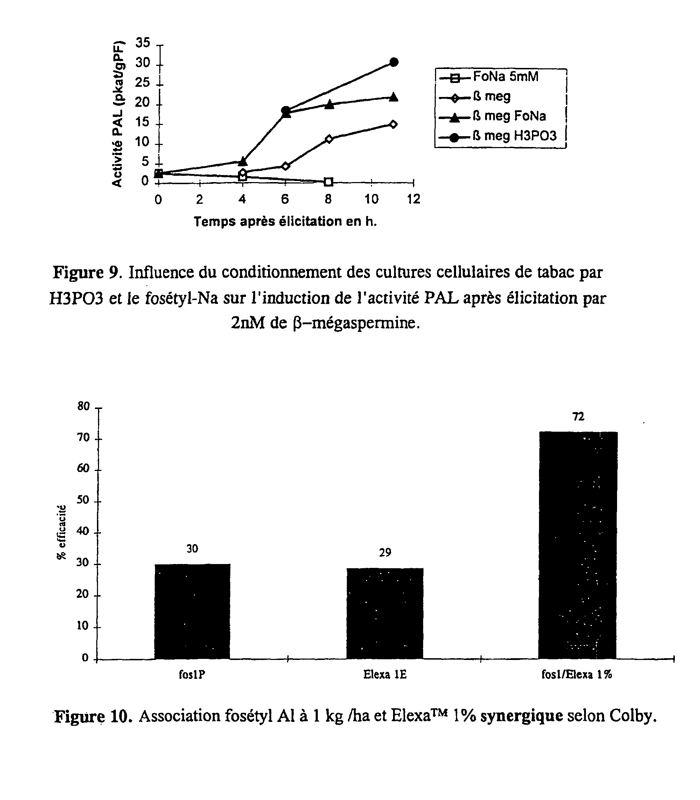

**Figure 9.** Influence du conditionnement des cultures cellulaires de tabac par $H_3PO_3$ et le fosetyl-Na sur l'induction de l'activité PAL après élicitation par 2nM de β-mégaspermine..

Les cultures cellulaires ont été conditionnées pendant 18h par 5mM de $H_3PO_3$ ou de fosetyl-Na, et élicitées par 2nM de β-mégaspermine. L'élicitation seule entraîne une augmentation de l'activité PAL qui se stabilise 8h après l'application de l'éliciteur. L'activité PAL de cellules prétraitées par $H_3PO_3$ ou par le fosetyl-Na est toujours supérieure à celle observées dans les cellules non-conditionnées.

**Conclusion :** Ces expérimentations démontrent l'effet potentialisateur de $H_3PO_3$ et du fosetyl-Na sur les réponses de défense du tabac. $H_3PO_3$ et le fosetyl-Na n'ont par eux-mêmes aucun effet sur l'activité de la PAL, de la LOX ou sur la synthèse d'AS. Le conditionnement sensibilise les cultures cellulaires à répondre à des concentrations faibles en éliciteurs ou augmente la sensibilité des cellules aux éliciteurs.

Exemple 2 : **Protection antifongique.**

**1) Oïdium /blé** *(Erysiphe graminis* **f.sp.***tritici***):**

Des blés de la variété Victo (commercialisée par la firme Pionner génétique) sont cultivés en chambre froide à 10°C avec une taux d'HR de 90% et soumis à une photopériode de 12H.

Les plants âgés de trois semaines environ (stade 2 feuilles bien développées) sont conditionnés une journée avant traitement dans une serre à 20°C et arrosés.

Les produits sont appliqués soit en séquence soit en mélange.

On prépare à partir des différents composés par dilution dans l'eau les suspensions diluées correspondant à un volume de pulvérisation de 250 litres de liquide de pulvérisation par hectare.

Le potentialisateur est appliqué 24h ou 48 h avant l'éliciteur, dans le cas d'un traitement séquentiel.

La contamination a lieu 2 jours , 4 jours ou 5 jours après le traitement par l'éliciteur. Elle est assurée par balayage des plants par des plants de blé préalablement contaminées la semaine précédente et qui présentent un feutrage conidien pulvérulent (pathogène obligatoire qui ne supporte pas l'eau libre pour s'installer).

Après cette contamination, les plants de blé sont placés en incubation pendant 7 jours à 20°C dans une atmosphère de 85% HR

**2) Mildiou de la vigne (***Plasmopara viticola***)**

Des boutures de vigne (Vitis vinifera), variété Chardonnay, sont cultivés dans des godets en serre. Lorsque ces plants sont âgés de 2 mois (stade 4-5 feuilles), ils sont placés en subirrigation durant une semaine avant traitement dans une serre à 20°C afin d'éviter tout effet de stress.

Les produits sont appliqués soit en séquence soit en mélange.

On prépare à partir des différents composés par dilution dans l'eau les suspensions diluées correspondant à un volume de pulvérisation de 500 litres de liquide de pulvérisation par hectare.

Le potentialisateur est appliqué 6 jours avant l'éliciteur, dans le cas d'un traitement séquentiel.

La contamination a lieu 6 jours après le traitement par l'éliciteur. Elle est assurée par pulvérisation d'une suspension aqueuse de spores de *Plasmopara viticola* obtenue à partir de feuilles sporulées contaminées 7 jours auparavant. Ces spores sont mises en suspension à raison de 100000 unités par cm3.

Les plants contaminés sont ensuite mis en incubation pendant 7 jours en atmosphère humide de type brouillard à 18-20°C

La lecture a lieu 7 jours après la contamination, en comparaison avec des plants témoins , non traités mais contaminés. On estime de façon visuelle la surface des feuilles présentant sous leur face inférieure un duvet blanchâtre correspondant à la sporulation du champignon.

On calcule à partir du taux de surface foliaire sporulée et au moyen de la formule d'Abbott l'efficacité du produit ou des produits de traitement établie sur trois feuilles par plant et trois plants par facteur d'essai.

Une éventuelle synergie est ensuite détectée grâce à l'application de la méthode définie par Limpel, L.E., P.H. Schuldt et D.Lammont, 1962, Proc. NEWCC 16:48-53, en utilisant la formule suivante, encore appelée formule de Colby :

$$E= X + Y - X.Y/100$$

dans laquelle:

- E est le pourcentage attendu d'inhibition de la croissance du champignon par un mélange des deux antifongiques A et B à des doses définies, respectivement égales à a et b ;
- X est le pourcentage d'inhibition observé par le composé antifongique et/ou antibactérien et/ou antiviral A à la dose a,
- Y est le pourcentage d'inhibition observé par le composé antifongique et/ou antibactérien et/ou antiviral B à la dose b.

Quand le pourcentage d'inhibition observé du mélange est supérieur à E, il y a synergie.

<u>Résultats :</u> on se reportera aux figures 10 à 20 en fin de descriptions, figures pour lesquelles les commentaires suivants sont donnés :

**Figure 10.** Influence du conditionnement de plants de blé par le fosetyl-Al appliqué à 1kg/ha (Aliette WG 80%) sur le développement de l'oidium après induction par un éliciteur de type carbohydrate Elexa™ à 1% dans la bouillie d'application adjuvantée avec le mouillant R56 à 0,1%.

L'analyse de Colby démontre un effet synergique entre le fosetyl-Al et Elexa™ adjuvanté de R56 dans les conditions de l'essai, contre l'oidium du blé (*Erysiphe graminis* f.sp. *tritici*).

|  | fosetyl-Al (1kg/ha ) X Elexa™ 1% + R56 0,1% |
|---|---|
| % efficacité observée | 72 |
| Colby théorique | 50,3 |
| synergie | + |

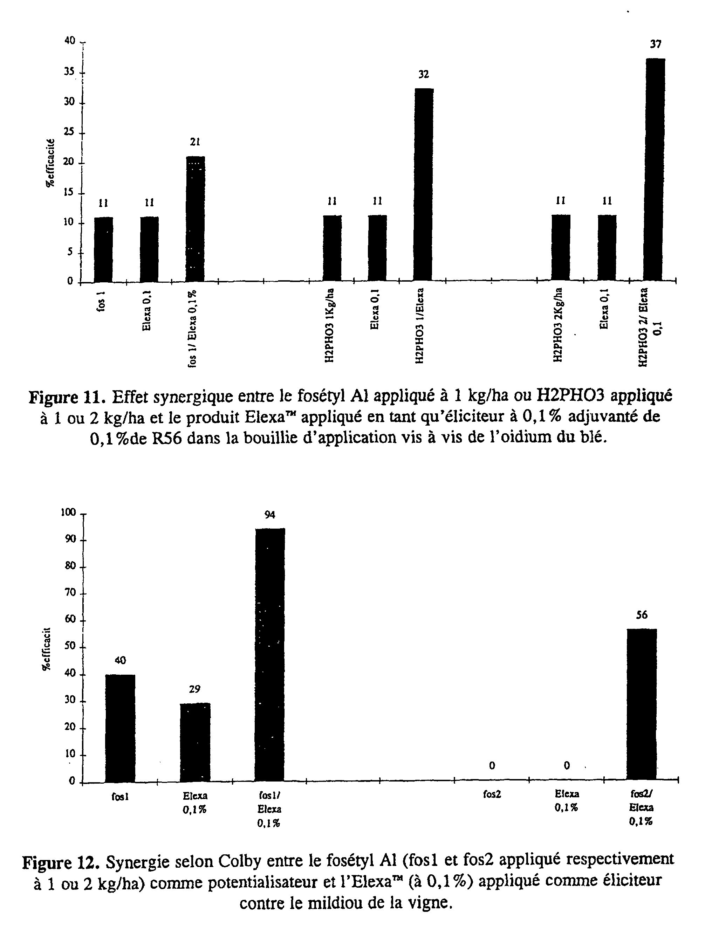

**Figure 11.** Effet synergique entre le fosetyl-Al appliqué à 1kg/ha ou $H_2PHO_3$ appliqué à 1 ou 2kg/ha et le produit Elexa™ appliqué en tant qu'éliciteur à 0,1% adjuvanté de 0,1%de R56 dans la bouillie d'application vis à vis de l'oïdium du blé.

Dans cet essai, la lecture des symptômes a été réalisée sur les premières, deuxièmes et troisièmes feuilles de 24 plants de blé repartis dans trois pots ; 48 heures ont séparé l'application du potentialisateur (fosetyl-Al ou $H_2PHO_3$) et l'application de l'éliciteur Elexa™ à 0,1% additionné de R56 à 0,1%.

| | fosetyl-Al (1kg/ha) X Elexa™ 0,1% + R56 0,1% | H₂PHO₃ (1kg/ha) X Elexa™ 0,1% + R56 0,1% | H₂PHO₃ (2kg/ha) X Elexa™ 0,1% + R56 0,1% |
|---|---|---|---|
| % efficacité observée | 21 | 32 | 37 |
| Colby théorique | 20,7 | 20,7 | 20,7 |
| synergie | + | + | + |

**Figure 12.** Influence potentialisatrice du fosetyl-Al à 1 ou 2 kg/ha après élicitation avec Elexa™ à 0,1% adjuvanté avec 0,1% de R56 dans la bouillie d'application contre le mildiou de la vigne.

Dans deux essais indépendants, on note une synergie selon Colby de la combinaison fosetyl-Al X Elexa™ 0,1 % (+ R56 à 0,1%).

| | fosetyl-Al (1kg/ha) X Elexa™ 0,1% + R56 0,1% (1°essai) | fosetyl-Al (2kg/ha) X Elexa™ 0,1% + R56 0,1% (2°essai) |
|---|---|---|
| % efficacité observée | 94 | 56 |
| Colby théorique | 57,4 | 0 |
| synergie | + | + |

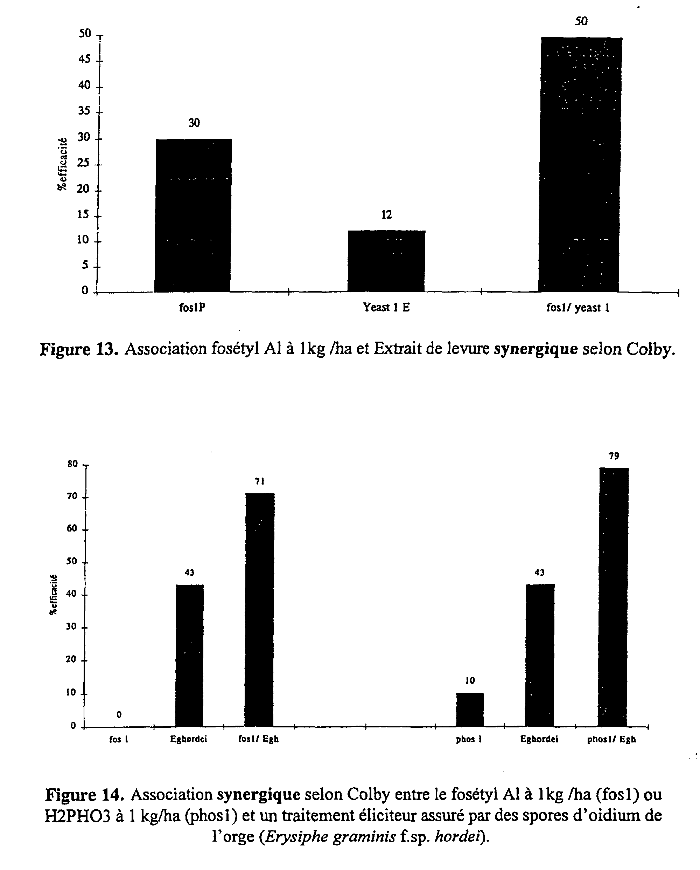

**Figure 13.** Influence du fosetyl-Al (fosl à 1kg/ha) sur la protection antioidium du blé après induction par un éliciteur de type extrait de levure à 1g/l (yeast 1E).

Une synergie selon Colby est mise en évidence pour l'association fosetyl-Al - extrait de levure contre l'oidium du blé.

| | fosetyl-Al (1Kg/ha) X extrait de levure 1g /l (yeast extract Difco™) |
|---|---|
| % efficacité observée | 50 |
| Colby théorique | 38,4 |
| synergie | + |

**Figure 14.** Influence d'un conditionnement de plants de blé par le fosetyl-Al ou l'acide phosphoreux (H2PHO3) sur l'oidium du blé après élicitation par un éliciteur de type spores tuées ou non d'un champignon non hôte (*Erysiphe graminis* f. sp, *hordei*) responsable de l'oidium de l'orge.

| | fosetyl-Al (1kg/ha) X *Erysiphe graminis* f.sp.*hordei* | H2PHO3 (1kg/ha) X *Erysiphe graminis* f.sp.*hordei* |
|---|---|---|
| % efficacité observée | 71 | 79 |
| Colby théorique | 43 | 40,5 |
| synergie | + | + |

Une synergie selon Colby est démontrée dans les deux cas où le potentialisateur est soit le fosetyl-Al soit l'$H_2PHO_3$ et l'éliciteur des spores d'un champignon non hôte sur le blé.

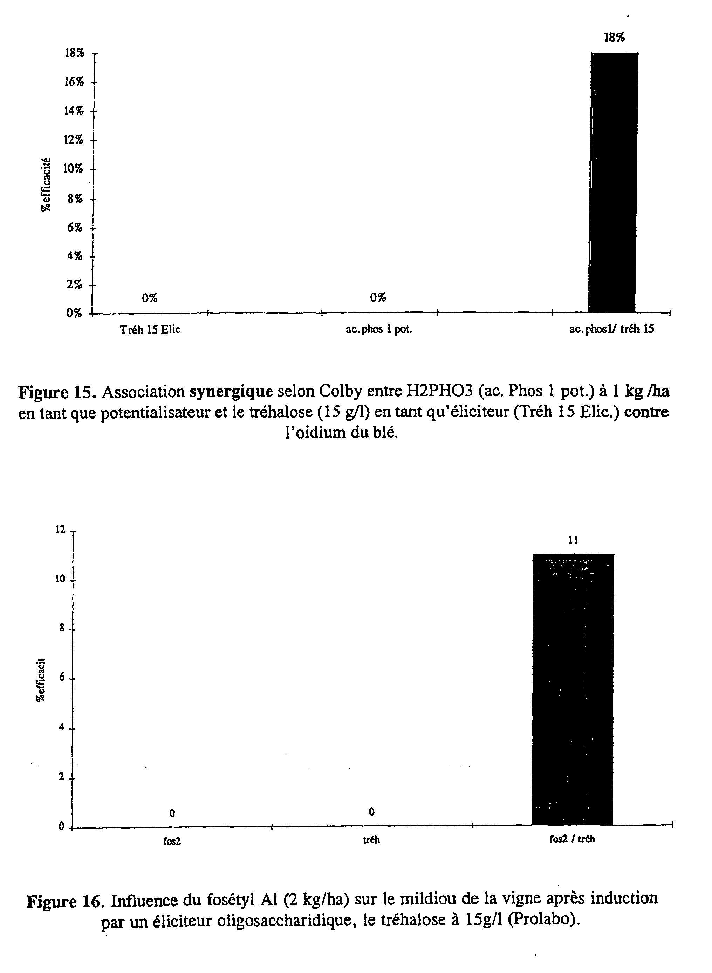

**Figure 15.** Influence de $H_2PHO_3$ (1kg/ha) sur la protection antioidium de plants de blé après induction par un éliciteur oligosaccharidique comme le tréhalose à 15g/l (Prolabo).

| | $H_2PHO_3$ (1kg/ha) X tréhalose 15g/l (Prolabo) |
|---|---|
| % efficacité observée | 18 |
| Colby théorique | 0 |
| synergie | + |

Un effet synergique selon Colby est observé en associant l'effet potentialisateur de l'acide phosphoreux et éliciteur du tréhalose vis à vis de l'oïdium du blé.

**Figure 16.** Influence du fosetyl-Al (2kg/ha) sur le mildiou de la vigne après induction par un éliciteur oligosaccharidique , le tréhalose à 15g/l (Prolabo).

| | fosetyl-Al (2kg/ha) X tréhalose 15g/l (Prolabo) |
|---|---|
| % efficacité observée | 11 |
| Colby théorique | 0 |
| synergie | + |

Un effet synergique selon Colby est observé en associant l'effet potentialisateur du fosetyl-Al et éliciteur du tréhalose vis à vis du mildiou de la vigne.

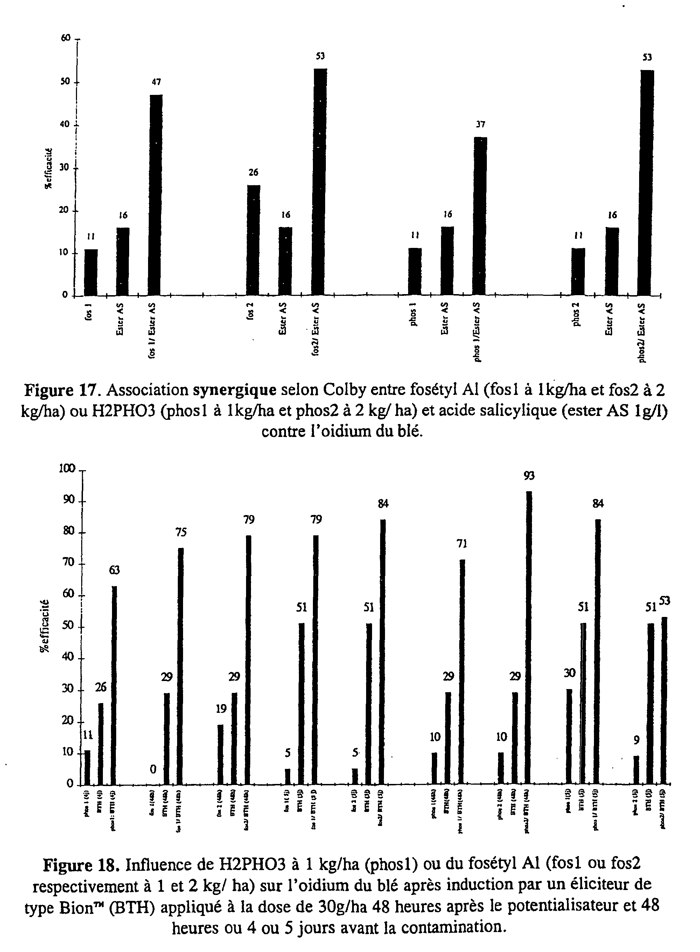

**Figure 17.** Influence du fosetyl-Al (1 ou 2 kg/ha) ou de $H_2PHO_3$ (1 ou 2 kg/ha) sur l'oidium du blé après induction par l'acide salicylique appliqué à 1g/l 48 heures après le potentialisateur et 4 jours avant la contamination.

| | fosetyl-Al (1kg/ha) X Ester AS (1g/l) | fosetyl-Al (2kg/ha) X Ester AS (1g/l) | $H_2PHO_3$ (1kg/ha) X Ester AS (1g/l) | $H_2PHO_3$ (2kg/ha) X Ester AS (1g/l) |
|---|---|---|---|---|
| % efficacité observée | 47 | 53 | 37 | 53 |
| Colby théorique | 25,2 | 37,8 | 25,2 | 25,2 |
| synergie | + | + | + | + |

Le fosetyl-Al ou l' $H_2PHO_3$ amplifient de façon synergique, l'effet éliciteur de l'acide salicylique.

**Figure 18.** Influence de $H_2PHO_3$ (1 kg/ha) ou du fosetyl-Al (1 ou 2 kg/ha) sur l'oidium du blé après induction par un éliciteur de type Bion™ (BTH) appliqué à la dose de 30g/ha 48 heures après le potentialisateur et 48 heures ou 4 ou 5 jours avant la contamination.

| | 1°essai | 2° essai | | | | | | |
|---|---|---|---|---|---|---|---|---|
| combinaison | $H_2PHO_3$ (1kg/ha) X BTH | fosetyl-Al (1kg/ha) X BTH | | fosetyl-Al (2kg/ha) X BTH | | $H_2PHO_3$ (1kg/ha) X BT | | $H_2PHO_3$ (2kg/ha) X BTH |
| délai éiic/cont | 4 jours | 48 h | 5 jours | 48 h | 5 jours | 48 h | 5 jours | 48 h |
| %efficacité observée | 63 | 75 | 79 | 79 | 84 | 71 | 84 | 93 |
| Colby théorique | 34 | 29 | 53,4 | 52,4 | 53,4 | 36,1 | 65,7 | 36,5 |
| synergie | + | + | + | + | + | + | + | + |

Une synergie selon Colby est observée pour les différentes combinaisons où le fosetyl-Al ou $H_2PHO_3$ sont associés au bion™ vis à vis de l'oidium du blé.

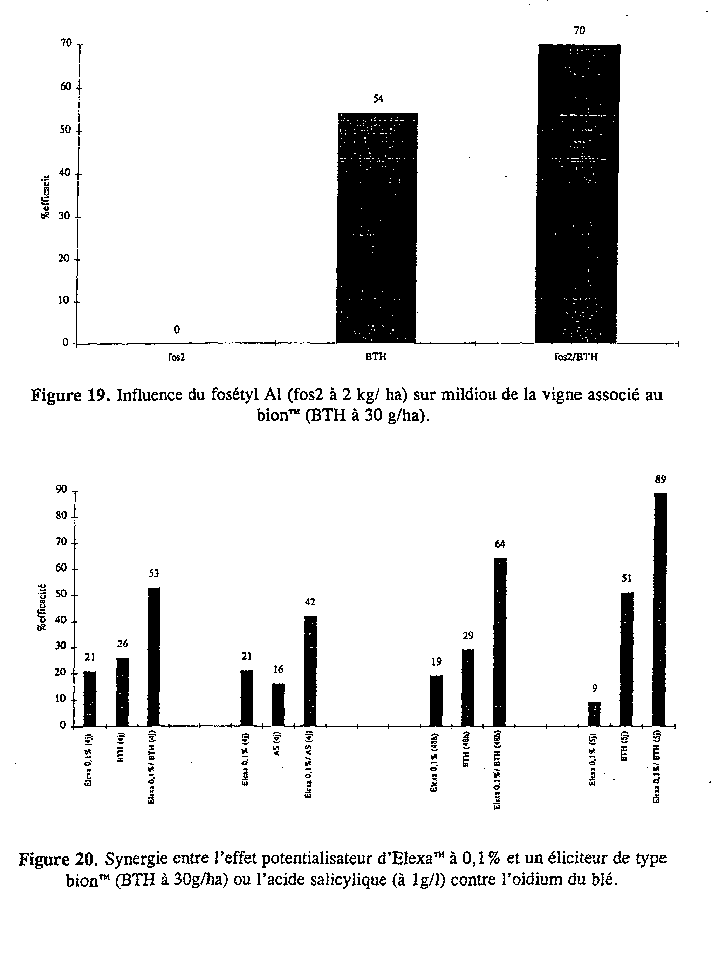

**Figure 19.** Influence du fosetyl-Al (2 kg/ha) sur le mildiou de la vigne associé à un éliciteur de type bion™ (BTH à 30 g /ha).

| | fosetyl-Al (2 kg/ha) X bion™ 30 g/ha |
|---|---|
| % efficacité observée | 70 |
| Colby théorique | 54 |
| synergie | + |

Un effet synergique selon Colby est observé en associant l'effet potentialisateur du fosetyl-Al et éliciteur du bion™ vis à vis du mildiou de la vigne.

**Figure 20.** Influence d'Elexa™ (ici potentialisateur) à 0,1 % adjuvanté de R56 à 0,1 % dans la bouillie d'application sur l'oidium du blé associé à un traitement par un éliciteur de type bion™ (BTH à 30 g /ha) ou ester d'acide salicylique (à 1 g/l).

Dans le 1° essai, 4 jours séparent le traitement éliciteur et la contamination alors que dans le 2° essai, le délai entre éliciteur et contamination est soit de 48 heures soit de 5 jours. Dans les deux cas, 48 heures séparent les traitements potentialisateur et éliciteur.

| combinaison | Elexa™ 0,1% X BTH | Elexa™ 0,1% X ester AS | Elexa™ 0,1% X BTH | |
|---|---|---|---|---|
| élai élic/cont | 4 j (essai 1) | 4 j (essai 1) | 48h (essai 2a) | 5 j (essai 2b) |
| % efficacité observée | **53** | **42** | **64** | **89** |
| Colby théorique | **41,5** | **24,5** | **42,5** | **54,4** |
| synergie | + | + | + | + |

On observe dans chaque cas un effet synergique selon Colby. Dans tous les cas, l'Elexa™ amplifie la réponse élicitrice du BTH ou de l'acide salicylique.

<u>Conclusions :</u> Des effets synergiques selon Colby ont été mis en évidence entre le fosetyl-Al et ses dérivés et différentes catégories d'éliciteurs pouvant être des polysaccharides (Elexa™), des sucres simples (tréhalose), des composés comme l'acide salicylique et/ou ses esters, du Bion™ (BTH) ou des spores de champignons non hôtes (*Erysiphe graminis hordei*) dans les tests biologiques réalisés sur blé et vigne. De même, des effets synergiques ont été mis en évidence entre Elexa™ et des éliciteurs comme le Bion™ ou l'acide salicylique et/ou ses esters.

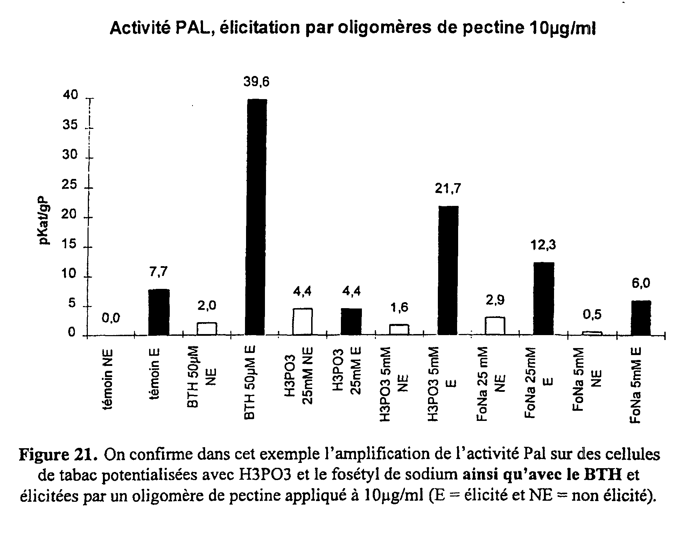

Ces exemples viennent compléter et corréler les effets physiologiques révélés sur cellules de tabac. On a également montré, dans le cas du tabac, une potentialisation par le Bion™ (BTH) lors d'une élicitation par un oligomère de pectine (**cf. Figure 21**).

**Exemple 3 : Test en plein champ sur oïdium (*erysiphe cichoracerum*) du melon (cucumis melo, variété rochet) par traitement foliaire.**

L'association fosetyl-+ extrait d'algues contribue à une **large diminution de l'attaque** significative par rapport à l'emploi des produits seuls appliqués aux mêmes doses comme le montrent les résultats dans le tableau ci-dessous.

Le fongicide utilisé est le fosetyl-al (WG appliqué à 1,25kg/ha soit 1000g/ha de matière active) et l'extrait d'algues (solution LC, 1l/ha) est Agrimer 540 de la société Agrimer.

Tous ces produits sont utilisés à une dose de 1000g/ha et on détermine 15 jours après deux traitements T1 et T2 (faits à 7 jours d'intervalle) le pourcentage de plants attaqués par la maladie.

| | % à T1+15 jours | % à T2+15 jours |
|---|---|---|
| Témoin non traité | 91,7 | 95,0 |
| fosetyl-al | 80,0 | 80,0 |
| Agrimer 540 | 85,0 | 86,7 |
| fosetyl-al + Agrimer 540 | **48,3** | **48,3** |

**Exemple 4 : Test en plein champ sur oïdium (*erysiphe graminis*) du blé (triticum aestivum, variété winter) par traitement foliaire.**

L'association fosetyl-+ extrait d'algues contribue à une **diminution de l'attaque** significative par rapport à l'emploi des produits seuls appliqués aux mêmes doses comme le montrent les résultats dans le tableau ci-dessous.

Le fongicide utilisé est le fosetyl-al (WG appliqué à 1,25kg/ha soit 1000g/ha de matière active) et l'extrait d'algues (solution LC, 1l/ha) est Agrimer 540 de la société Agrimer.

Tous ces produits sont utilisés à une dose de 1000g/ha et on détermine le pourcentage de plants attaqués (% de feuilles détruites) par la maladie, d'une part sur un étage foliaire traité en semi curatif (lecture faite 22 jours après traitement T) et d'autre part sur un étage foliaire traité en curatif (lecture faite 27 jours après traitement T).

| | (% de feuilles détruites à T+22, semi curatif) | (% de feuilles détruites à T+27, curatif) |
|---|---|---|
| Témoin non traité | 91,1 | 100 |

(suite)

|  | (% de feuilles détruites à T+22, semi curatif) | (% de feuilles détruites à T+27, curatif) |
|---|---|---|
| fosetyl-al | 77,8 | 100 |
| Agrimer 540 | 77,8 | 100 |
| fosetyl-al + Agrimer 540 | 71,1 | 93,3 |

**Revendications**

1. Utilisation d'un ou plusieurs dérivé antifongique et/ou antibactérien et/ou antiviral B choisi dans la liste comprenant l'acide phosphoreux ou ses dérivés et ses sels alcalins ou alcalino-terreux, l'acibenzolar-S-methyl, le chitosan, l'acide aminobutyrique, comme amplificateur (potentialisateur) des réponses physiologiques des plantes obtenues après application d'un ou plusieurs éliciteur A ; celui-ci ne pouvant être simultanément utilisé comme potentialisateur.

2. Utilisation selon la revendication 1 **caractérisée en ce que** le composé éliciteur A est choisi dans la liste comprenant des protéines, des oligosaccharides, des polysaccharides, des lipides, des glycolipides, des glycoprotéines, des peptides, des extraits de parois issus de matériel végétal et/ou de champignons, des champignons, l'acibenzolar-S-methyl ou l'un de ses analogues, des extraits de levure, de l'acide salicylique et/ou l'un ou plusieurs de ses esters, un ou plusieurs extrait d'algues.

3. Utilisation selon la revendication 1 ou la revendication 2 **caractérisée en ce que** le composé potentialisateur B est un phosphite métallique

4. Utilisation selon la revendication 3 **caractérisée en ce que** le composé potentialisateur B est le fosétyl-Al ou le fosétyl-Na.

5. Utilisation selon la revendication 1 ou la revendication 2 **caractérisée en ce que** B est l'acide phosphoreux.

6. Utilisation selon la revendication 1 ou la revendication 2 **caractérisée en ce que** B est l'acibenzolar-S-methyl

7. Utilisation selon la revendication 1 ou la revendication 2 **caractérisée en ce que** B est du chitosan.

8. Utilisation selon l'une quelconque des revendications précédentes **caractérisée en ce que** A est i) un oligosaccharide de type β-glucane isolé de parois de *Phytophthora megasperma* (Pmg), ou ii) un oligomère de pectine, ou iii) la β-mégaspermine.

9. Utilisation selon l'une quelconque des revendications 1 à 7 **caractérisée en ce que** A est du chitosan, de l'acibenzolar-S-methyl, de l'acide salicylique ou un ou plusieurs de ses esters, un extrait de levure, du tréhalose, des spores d'un champignon non hôte.

10. Utilisation selon l'une quelconque des revendications précédentes **caractérisée en ce qu'**elle peut être complétée par un traitement fongicide classique à l'aide d'un fongicide connu, ce traitement pouvant avoir lieu simultanément ou séparément des applications de A et/ou B.

11. Procédé de lutte à préventif contre les champignons phytopathogènes des cultures et/ou contre les bactéries et/ou contre les virus **caractérisé en ce que** l'on applique sur les parties aériennes des végétaux une quantité efficace et non phytotoxique d'une combinaison d'un ou plusieurs composé A et d'au moins un composé B; A et B étant tels que définis aux revendications 1 à 9.

12. Procédé selon la revendication 11 **caractérisé en ce que** l'on traite les cultures céréalières (blé, orge, maïs, riz) et légumières (haricot, oignon, cucurbitacées, chou, pomme de terre, tomate, poivron, épinard, pois, laitue, céleri, endives), les cultures fruitières (fraisiers, framboisiers), les cultures arboricoles (pommiers, poiriers, cerisiers, ginseng, citronniers, cocotiers, pécaniers, cacaoyers, noyers, hévéas, oliviers, peupliers, bananiers), la vigne, le tournesol, la betterave, le tabac ou les cultures ornementales.

**Patentansprüche**

1. Verwendung von einem oder mehreren antifungalen und/oder antibakteriellen und/oder antiviralen Derivat(en) B aus der Reihe phoshorige Säure oder ihre Derivate und ihre Alkali- oder Erdalkalisalze, Acibenzolar-S-Methyl, Chitosan und Aminobuttersäure als Potenzierungsmittel für physiologische Reaktionen von Pflanzen, die nach Ausbringung von einem oder mehreren Elicitor(en) A erzielt wurden, wobei dieser Elicitor nicht gleichzeitig als Potenzierungsmittel verwendet werden kann.

2. Verwendung nach Anspruch 1, **dadurch gekennzeichnet, daß** die Elicitorverbindung A aus der Reihe Proteine, Oligosaccharide, Polysaccharide, Lipide, Glycolipide, Gylcoproteine, Peptide, Wandextrakte von Pflanzenmaterial oder Pilzen, Pilze, Acibenzolar-S-Methyl oder eines seiner Analoge, Hefeextrakte, Salicylsäure und/oder ein oder mehrere ihrer Ester und ein oder mehrere Algenextrakt(e) stammt.

3. Verwendung nach Anspruch 1 oder 2, **dadurch gekennzeichnet, daß** es sich bei der Potenzierungsmittelverbindung B um ein Metallphosphit handelt.

4. Verwendung nach Anspruch 3, **dadurch gekennzeichnet, daß** es sich bei dem Potenzierungsmittel B um Fosetyl-Al oder Fosetyl-Na handelt.

5. Verwendung nach Anspruch 1 oder 2, **dadurch gekennzeichnet, daß** es sich bei B um die phosphorige Säure handelt.

6. Verwendung nach Anspruch 1 oder 2, **dadurch gekennzeichnet, daß** es sich bei B um Acibenzolar-S-Methyl handelt.

7. Verwendung nach Anspruch 1 oder 2, **dadurch gekennzeichnet, daß** es sich bei B um Chitosan handelt.

8. Verwendung nach einem der vorhergehenden Ansprüche, **dadurch gekennzeichnet, daß** es sich bei A um i) ein Oligosaccharid des β-Glucan-Typs, das aus der Wand von *Phytophthora megasperma* (Pmg) isoliert wurde, oder um ii) ein Pektinoligomer oder um iii) β-Megaspermin handelt.

9. Verwendung nach einem der Ansprüche 1 bis 7, **dadurch gekennzeichnet, daß** es sich bei A um Chitosan, Acibenzolar-S-Methyl, Salicylsäure oder einen oder mehrere ihrer Ester, einen Hefeextrakt, Trehalose oder Sporen eines Nichtwirtspilzes handelt.

10. Verwendung nach einem der vorhergehenden Ansprüche, **dadurch gekennzeichnet, daß** sie durch eine traditionelle Fungizidbehandlung mit einem bekannten Fungizid ergänzt werden kann, wobei diese Behandlung gleichzeitig mit der Ausbringung von A und B oder separat erfolgen kann.

11. Verfahren zur vorbeugenden Bekämpfung von pflanzenpathogenen Pilzen und/oder von Bakterien und/oder von Viren, **dadurch gekennzeichnet, daß** man eine wirksame, nichtphytotoxische Menge einer Kombination von einer oder mehreren Verbindungen A und mindestens einer Verbindung B auf die oberirdischen Teile von Pflanzen ausbringt, wobei A und B wie in den Ansprüchen 1 bis 9 definiert sind.

12. Verfahren gemäß Anspruch 11, **dadurch gekennzeichnet, daß** man Getreidekulturen (Weizen, Gerste, Mais, Reis), Gemüsekulturen (Bohne, Zwiebel, Kürbisgewächse, Kohl, Kartoffel, Tomate, Paprika, Spinat, Erbse, Salat, Sellerie, Endivie), Obstkulturen (Erdbeerpflanzen, Himbeerstauden), Baumkulturen (Apfel-, Birn-, Kirschbäume, Ginseng, Zitronenbäume, Kokospalmen, Pecannußbäume, Kakaobäume, Walnußbäume, Kautschukbäume, Olivenbäume, Pappeln, Bananenstauden), Weinrebe, Sonnenblume, Zuckerrübe, Tabak oder Zierpflanzenkulturen behandelt.

**Claims**

1. Use of one or more antifungal and/or antibacterial and/or antiviral derivatives B chosen from the list comprising phosphorous acid or its derivatives and its alkali metal or alkaline-earth metal salts, acibenzolar-S-methyl, chitosan, aminobutyric acid, as amplifiers (potentiators) of the physiological responses of plants, obtained after application of one or more elicitors A; this not being able to be used simultaneously as potentiator.

2. Use according to Claim 1, **characterized in that** the elicitor compound A is chosen from the list comprising proteins, oligosaccharides, polysaccharides, lipids, glycolipids, glycoproteins, peptides, extracts from the walls of plant material and/or of fungal material, fungi, acibenzolar-S-methyl or one of its analogues, yeast extracts, salicylic acid and/or one or more of its esters, one or more algal extracts.

3. Use according to Claim 1 or 2, **characterized in that** the potentiating compound B is a metal phosphite.

4. Use according to Claim 3, **characterized in that** the potentiating compound B is fosetyl-Al or fosetyl-Na.

5. Use according to Claim 1 or 3, **characterized in that** B is phosphorous acid.

6. Use according to Claim 1 or 2, **characterized in that** B is acibenzolar-S-methyl.

7. Use according to Claim 1 or 2, **characterized in that** B is chitosan.

8. Use according to any one of the preceding claims, **characterized in that** A is i) an oligosaccharide of β-glucan type isolated from the walls of *Phytophthora megasperma* (Pmg), ii) a pectin oligomer or iii) β-megaspermine.

9. Use according to any one of Claims 1 to 7, **characterized in that** A is chitosan, acibenzolar-S-methyl, salicylic acid or one or more of its esters, a yeast extract, trehalose or spores of a non-host fungus.

10. Use according to any one of the preceding claims, **characterized in that** it can optionally be coupled with a conventional fungicidal treatment using a known fungicide, it being possible for this treatment to take place simultaneously with or separately from the applications of A and/or B.

11. Process for preventively controlling the phytopathogenic fungi of crops and/or for controlling bacteria and/or viruses, **characterized in that** an effective and non-phytotoxic amount of a combination of one or more compounds A and of at least one compound B is applied to the aerial parts of the plants, A and B being as defined in claims 1 to 9.

12. Process according to Claim 11, **characterized in that** cereals (wheat, barley, corn and rice) and legumes (bean, onion, cucurbits, cabbage, potato, tomato, capsicum, spinach, pea, lettuce, celery and endive), fruiting crops (strawberry and raspberry plants), arboriculture crops (apple, pear, cherry, ginseng and lemon trees, coconut palms and pecan, cacao, walnut, hevea, olive, poplar and banana trees), grapevine, sunflower, beetroot, tobacco or ornamental crops are treated.

**Figure 1.** Influence du conditionnement des cultures cellulaires de tabac par H3PO3 sur l'induction de l'activité PAL après élicitation par un éliciteur oligosaccharidique isolé de Pmg.

**Figure 2.** Influence de H3PO3 sur l'activité lipoxygénase (LOX) de cultures cellulaires de tabac après induction par un éliciteur oligosaccharidique isolé de Pmg.

**Figure 3**. Influence du conditionnement des cultures cellulaires de tabac par H3PO3 sur l'induction de l'activité PAL après élicitation par des oligomères de pectine à 20µg/ml.

**Figure 4** (même légende que pour la figure 3). Accumulation d'AS dans des cultures cellulaires de tabac préconditionnées ou non par H3PO3 et élicitées par des oligomères de pectine.

**Figure 5**. Influence du conditionnement des cultures cellulaires de tabac par H3PO3 et le fosétyl-Na sur l'induction de l'activité PAL après élicitation par des oligomères de pectine.

**Figure 6**. Influence du conditionnement des cultures cellulaires de tabac par H3PO3 sur l'induction de l'activité PAL après élicitation par 2nM de β-mégaspermine.

**Figure 7.** Influence de H3PO3 sur l'activité lipoxygénase (LOX) de cultures cellulaires de tabac après induction par 2nM de β-mégaspermine.

**Figure 8.** Accumulation d'AS dans des cultures cellulaires de tabac préconditionnées ou non par H3PO3 et élicitées par 5nM de β-mégaspermine (même légende que figure 6 mais en remplaçant 2nM par 5nM).

**Figure 9**. Influence du conditionnement des cultures cellulaires de tabac par H3PO3 et le fosétyl-Na sur l'induction de l'activité PAL après élicitation par 2nM de β–mégaspermine.

**Figure 10**. Association fosétyl Al à 1 kg /ha et Elexa™ 1% **synergique** selon Colby.

**Figure 11.** Effet synergique entre le fosétyl Al appliqué à 1 kg/ha ou H2PHO3 appliqué à 1 ou 2 kg/ha et le produit Elexa™ appliqué en tant qu'éliciteur à 0,1% adjuvanté de 0,1%de R56 dans la bouillie d'application vis à vis de l'oidium du blé.

**Figure 12.** Synergie selon Colby entre le fosétyl Al (fos1 et fos2 appliqué respectivement à 1 ou 2 kg/ha) comme potentialisateur et l'Elexa™ (à 0,1%) appliqué comme éliciteur contre le mildiou de la vigne.

**Figure 13.** Association fosétyl Al à 1kg /ha et Extrait de levure **synergique** selon Colby.

**Figure 14.** Association **synergique** selon Colby entre le fosétyl Al à 1kg /ha (fos1) ou H2PHO3 à 1 kg/ha (phos1) et un traitement éliciteur assuré par des spores d'oidium de l'orge (*Erysiphe graminis* f.sp. *hordei*).

**Figure 15.** Association **synergique** selon Colby entre H2PHO3 (ac. Phos 1 pot.) à 1 kg /ha en tant que potentialisateur et le tréhalose (15 g/l) en tant qu'éliciteur (Tréh 15 Elic.) contre l'oidium du blé.

**Figure 16.** Influence du fosétyl Al (2 kg/ha) sur le mildiou de la vigne après induction par un éliciteur oligosaccharidique, le tréhalose à 15g/l (Prolabo).

**Figure 17.** Association **synergique** selon Colby entre fosétyl Al (fos1 à 1kg/ha et fos2 à 2 kg/ha) ou H2PHO3 (phos1 à 1kg/ha et phos2 à 2 kg/ ha) et acide salicylique (ester AS 1g/l) contre l'oidium du blé.

**Figure 18.** Influence de H2PHO3 à 1 kg/ha (phos1) ou du fosétyl Al (fos1 ou fos2 respectivement à 1 et 2 kg/ ha) sur l'oidium du blé après induction par un éliciteur de type Bion™ (BTH) appliqué à la dose de 30g/ha 48 heures après le potentialisateur et 48 heures ou 4 ou 5 jours avant la contamination.

**Figure 19.** Influence du fosétyl Al (fos2 à 2 kg/ ha) sur mildiou de la vigne associé au bion™ (BTH à 30 g/ha).

**Figure 20.** Synergie entre l'effet potentialisateur d'Elexa™ à 0,1% et un éliciteur de type bion™ (BTH à 30g/ha) ou l'acide salicylique (à 1g/l) contre l'oidium du blé.

**Activité PAL, élicitation par oligomères de pectine 10µg/ml**

**Figure 21.** On confirme dans cet exemple l'amplification de l'activité Pal sur des cellules de tabac potentialisées avec H3PO3 et le fosétyl de sodium **ainsi qu'avec le BTH** et élicitées par un oligomère de pectine appliqué à 10µg/ml (E = élicité et NE = non élicité).